# EUROPÄISCHE PATENTSCHRIFT

(11) **EP 4 065 436 B1**
(45) Veröffentlichungstag und Bekanntmachung des Hinweises auf die Patenterteilung: **29.11.2023**
(21) Anmeldenummer: 20785930.7
(22) Anmeldetag: 28.09.2020
(51) Int. Cl.: B60T 8/17, B60T 8/1766, B60T 7/20, B60T 13/08

(54) **VERFAHREN UND STEUERGERÄT ZUM BETREIBEN EINES GESPANNS AUS EINEM ZUGFAHRZEUG UND EINEM ANHÄNGER MIT EINER AUFLAUFBREMSE**
METHOD AND CONTROL DEVICE FOR OPERATING A TRACTOR-TRAILER COMBINATION COMPOSED OF A TRACTOR VEHICLE AND A TRAILER WITH AN OVERRUN BRAKE
PROCÉDÉ ET DISPOSITIF DE COMMANDE POUR FAIRE FONCTIONNER UN ENSEMBLE TRACTEUR-REMORQUE COMPOSÉ D'UN VÉHICULE TRACTEUR ET D'UNE REMORQUE COMPRENANT UN FREIN À INERTIE

(30) Priorität: 28.11.2019 DE 102019218516
(43) Veröffentlichungstag der Anmeldung: 05.10.2022
(73) Patentinhaber: Robert Bosch GmbH, 70442 Stuttgart (DE)
(72) Erfinder: STRATZ, Florian, 71282 Hemmingen (DE); MATSCHKE, Thomas, 74321 Bietigheim-Bissingen (DE); GOLL, Ralph, 71282 Hemmingen (DE)
(86) Internationale Anmeldenummer: PCT/EP2020/077059
(87) Internationale Veröffentlichungsnummer: WO 2021/104716

(56) Entgegenhaltungen:
- EP-A1- 1 612 081
- DE-A1- 19 519 768
- DE-A1-102008 019 592
- DE-C1- 4 412 430
- DE-C1- 4 446 358
- DE-U1-202012 009 953

## Beschreibung

### Gebiet der Erfindung

Die Erfindung betrifft ein Verfahren zum Betreiben eines Gespanns aus einem Zugfahrzeug und einem Anhänger mit einer Auflaufbremse und ein entsprechendes Steuergerät.

### Stand der Technik

Bei einem Gespann aus einem Zugfahrzeug und einem gebremsten Anhänger mit einer Auflaufbremse ist der Anhänger innerhalb der Auflaufbremse in einer Längsrichtung relativ beweglich zu dem Zugfahrzeug gelagert. Bei einem Bremsvorgang läuft der Anhänger aufgrund einer Massenträgheit des Anhängers auf das Zugfahrzeug auf. Die Auflaufbremse überträgt eine dabei wirkende Schubkraft zumindest anteilig auf Radbremsen des Anhängers und bremst den Anhänger ab. Eine resultierende Bremswirkung der Radbremsen reduziert die Schubkraft und das Zugfahrzeug wird weniger durch den Anhänger geschoben. Je nachdem in welchem Zustand die Auflaufbremse und/oder die Radbremsen sind, ergibt sich eine andere Bremswirkung und damit eine unterschiedliche Beeinflussung des Zugfahrzeugs.

Das Dokument DE 44 12 430 C1 offenbart ein Verfahren zum Betreiben eines Gespanns, wobei ein Gesamtgewicht des Gespanns unter Verwendung eines Antriebsmoments des Zugfahrzeugs und einer Beschleunigung des Gespanns ermittelt wird.

### Offenbarung der Erfindung

Vor diesem Hintergrund werden mit dem hier vorgestellten Ansatz ein Verfahren zum Betreiben eines Gespanns aus einem Zugfahrzeug und einem Anhänger mit einer Auflaufbremse und ein entsprechendes Steuergerät, sowie schließlich ein entsprechendes Computerprogrammprodukt und ein maschinenlesbares Speichermedium gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, den Zustand der Auflaufbremse beziehungsweise der Radbremsen des Anhängers zu überwachen und eine Bremskraftverteilung des Zugfahrzeugs entsprechend einzustellen, um eine Gesamtbremswirkung des Gespanns zu optimieren.

Es wird ein Verfahren zum Betreiben eines Gespanns aus einem Zugfahrzeug und einem Anhänger mit einer Auflaufbremse vorgeschlagen, wobei ein Gesamtgewicht des Gespanns unter Verwendung eines Antriebsmoments des Zugfahrzeugs und einer Beschleunigung des Gespanns ermittelt wird, eine Anhängerbremswirkung der Auflaufbremse unter Verwendung einer Verzögerung des Gespanns, des ermittelten Gesamtgewichts und einer Fahrzeugbremswirkung des Zugfahrzeugs ohne den Anhänger ermittelt wird und eine Bremskraftverteilung des Fahrzeugs unter Verwendung der ermittelten Anhängerbremswirkung eingestellt wird.

Ideen zu Ausführungsformen der vorliegenden Erfindung können unter anderem als auf den nachfolgend beschriebenen Gedanken und Erkenntnissen beruhend angesehen werden.

Ein Zugfahrzeug kann ein Fahrzeug mit einer Anhängerkupplung sein. Als Zugfahrzeug kann ein Fahrzeug bezeichnet werden, das zukünftig einen Anhänger ziehen soll, gerade den Anhänger zieht beziehungsweise mit dem Anhänger verbunden ist, oder zuvor den Anhänger gezogen hat beziehungsweise mit dem Anhänger verbunden war. Ein Gespann besteht aus dem Zugfahrzeug und dem Anhänger. Der Anhänger kann beispielsweise ein Transportanhänger oder ein Wohnanhänger sein.

Eine Auflaufbremse kann eine Relativbewegung zwischen dem Anhänger und dem Zugfahrzeug in einer Längsrichtung des Anhängers ermöglichen. Der Anhänger kann sich während eines Bremsvorgangs innerhalb eines Bewegungsspielraums der Auflaufbremse an das Zugfahrzeug annähern. Das Annähern kann als Auflaufen bezeichnet werden. Die Auflaufbremse kann die Relativbewegung verwenden, um den Anhänger abzubremsen. Beim Auflaufen wird dabei eine mit der Anhängerkupplung des Zugfahrzeugs verbundene Stange in eine Deichseleinheit der Auflaufbremse eingeschoben und betätigt dadurch beispielsweise über eine mechanische oder hydraulische Übersetzung Radbremsen des Anhängers. Je stärker das Zugfahrzeug während des Bremsvorgangs bremst und je schwerer der Anhänger ist, umso größer ist eine Bremswirkung am Anhänger.

Eine Beschleunigung beim Beschleunigen des Gespanns ist abhängig von einem bereitgestellten Antriebsmoment des Zugfahrzeugs, Verlusten des Gespanns und einem Gesamtgewicht des Gespanns. Das Antriebsmoment ist bekannt. Die Beschleunigung kann aus einer Änderung der Geschwindigkeit des Zugfahrzeugs abgeleitet werden. Die Verluste können als Schätzwerte hinterlegt sein. Aus den vorhandenen Werten kann das Gesamtgewicht zumindest überschlagsmäßig berechnet beziehungsweise geschätzt werden.

Eine Verzögerung des Gespanns kann ebenso aus einer Änderung der Geschwindigkeit abgeleitet werden. Eine Gesamtbremswirkung von Zugfahrzeug und Auflaufbremse kann aus der Verzögerung und dem Gesamtgewicht berechnet werden. Eine Fahrzeugbremswirkung kann im Steuergerät hinterlegt sein. Die Fahrzeugbremswirkung kann bei einer Fahrt des Zugfahrzeugs ohne Anhänger überprüft werden. Die Anhängerbremswirkung kann aus einer Differenz der Gesamtbremswirkung und der Fahrzeugbremswirkung bestimmt werden.

Durch die Anhängerbremswirkung ergibt sich eine zusätzliche Stützkraft auf die Anhängerkupplung. Die zusätzliche Stützkraft vergrößert eine Achslast auf einer Hinterachse des Zugfahrzeugs. Die zusätzliche Stützkraft resultiert dabei unter anderem aus einem Bremsmoment der Radbremsen des Anhängers. Das Bremsmoment kann aus der Anhängerbremswirkung abgeleitet werden. Durch die zusätzliche Stützlast kann ein Bremsdruck an den Rädern der Hinterachse des Zugfahrzeugs vergrößert werden und das Gespann damit insgesamt schneller abgebremst werden.

Das Gesamtgewicht kann ferner unter Verwendung einer Information über einen Rollwiderstand des Gespanns ermittelt werden. Der Rollwiderstand macht einen großen Anteil der Verluste des Gespanns aus. Der Rollwiderstand kann unter Verwendung einer Änderung der Geschwindigkeit des Gespanns beim Rollen beziehungsweise bei ungebremster und unbeschleunigter Fahrt geschätzt werden.

Das Gesamtgewicht kann ferner unter Verwendung einer Information über eine Steigung unter dem Gespann ermittelt werden. Die Steigung kann aus einer Geländeinformation, wie beispielsweise aus Kartendaten, unter Verwendung einer Position des Gespanns ausgelesen werden. Die Steigung kann positiv oder negativ sein. Auf der Steigung kann eine Hangabtriebskraft gegen oder mit dem Antriebsmoment wirken. Bergab kann das Gespann beschleunigt werden. Bergauf kann das Gespann gebremst werden. Die Steigung kann auch durch einen Neigungssensor des Zugfahrzeugs bestimmt werden.

Das Gesamtgewicht kann ferner unter Verwendung einer aktuellen Windinformation ermittelt werden. Bei Gegenwind kann das Gespann gebremst werden. Bei Rückenwind kann das Gespann beschleunigt werden. Ein Windwiderstand zumindest des Zugfahrzeugs ist bekannt. Die Windinformation kann in einer Wetterinformation enthalten sein. Ebenso kann die Windinformation durch zumindest einen Sensor des Zugfahrzeugs ermittelt werden. Beispielsweise kann eine Drehzahl eines Lüfterrads ausgewertet werden.

Beim Ermitteln des Gesamtgewichts kann eine Temperatur an der Auflaufbremse überwacht werden. Die Temperatur kann überwacht werden und eine Warnung bereitgestellt werden, wenn die Temperatur zu hoch ist. Die Warnung kann bereitgestellt werden, wenn die Temperatur größer als ein vorbestimmter Wert ist. In einer schleifenden Radbremse kann durch Reibung Wärme entstehen. Die Reibung bremst das Gespann ab und ist Teil der Verluste. In die Radbremsen des Anhängers kann je ein Temperatursensor integriert werden, der beispielsweise über einen Datenbus vom Zugfahrzeug ausgelesen werden kann. Durch eine Temperaturüberwachung kann ein Defekt an der Radbremse schnell erkannt werden.

Die Anhängerbremswirkung kann überwacht werden, beispielsweise permanent, periodisch und/oder anlassgesteuert. Eine Warnung kann bereitgestellt werden, wenn die Anhängerbremswirkung zu gering ist. Die Warnung kann bereitgestellt werden, wenn die Anhängerbremswirkung kleiner als ein vorbestimmter Wert ist. Beispielsweise kann die Warnung nach einer geringen Anzahl von Bremsvorgängen bereitgestellt werden. Durch die Warnung kann ein Fahrer des Zugfahrzeugs die Auflaufbremse kontrollieren und einen eventuellen Defekt an der Auflaufbremse erkennen und gegebenenfalls beseitigen.

Die Bremskraftverteilung kann ferner unter Verwendung eines unter Verwendung des Gesamtgewichts und eines Fahrzeuggewichts des Zugfahrzeugs ermittelten Anhängergewichts eingestellt werden. Die Bremskraftverteilung bezieht sich hierbei auf eine Verteilung der insgesamt in dem Zugfahrzeug bewirkten Bremskräfte durch geeignet verteiltes Ansteuern der an den mehreren Rädern des Zugfahrzeugs vorgesehenen Radbremsen. Das Anhängergewicht bewirkt bei jedem Bremsvorgang ein Trägheitsmoment, das zusätzlich zum Bremsmoment auf der Anhängerkupplung abgestützt wird. Das Trägheitsmoment hängt von einer Schwerpunktlage eines Schwerpunkts des Anhängers und dem Anhängergewicht des Anhängers ab. Zumindest das Anhängergewicht kann im Zuge der Bestimmung des Gesamtgewichts geschätzt werden. Durch das Trägheitsmoment kann der Bremsdruck zusätzlich vergrößert werden.

Das Verfahren kann beispielsweise in Software oder Hardware oder in einer Mischform aus Software und Hardware beispielsweise in einem Steuergerät implementiert sein.

Der hier vorgestellte Ansatz schafft ferner ein Steuergerät, das dazu ausgebildet ist, um die Schritte einer Variante des hier vorgestellten Verfahrens in entsprechenden Einrichtungen durchzuführen, anzusteuern bzw. umzusetzen.

Das Steuergerät kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind. Das Steuergerät kann Teil einer Bremssteuerung des Zugfahrzeugs sein oder mit dieser zusammenarbeiten.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass Änderungen im Rahmen des durch die angehängten Ansprüche definierten Umfangs möglich sind, um zu weiteren Ausführungsformen der Erfindung zu gelangen.

### Kurze Beschreibung der Zeichnungen

Nachfolgend werden Ausführungsformen der Erfindung unter Bezugnahme auf die beigefügte Zeichnung beschrieben, wobei weder die Zeichnung noch die Beschreibung als die Erfindung einschränkend auszulegen sind.

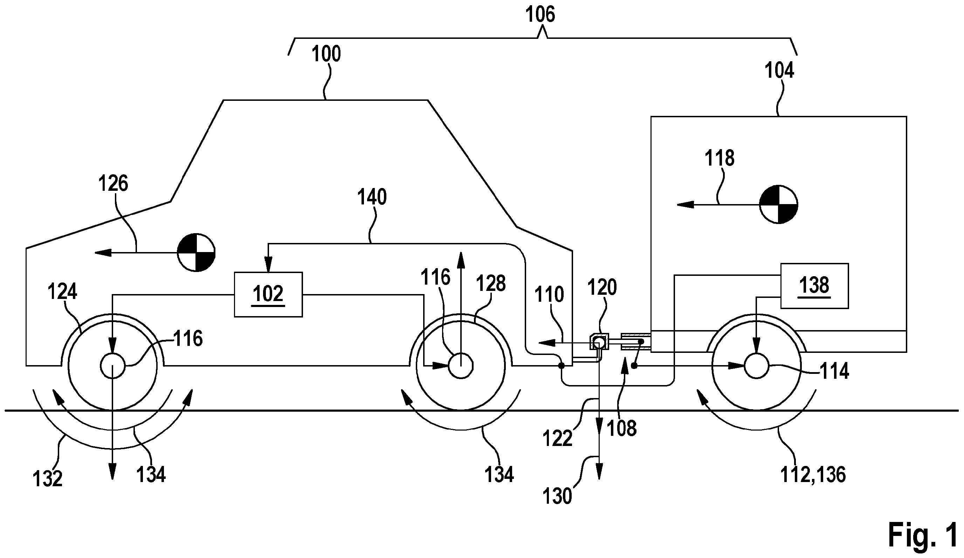

Fig. 1 zeigt eine Darstellung eines Bremsvorgangs eines Gespanns aus einem Zugfahrzeug mit einem Steuergerät gemäß einem Ausführungsbeispiel und einem Anhänger.

Die Figur ist lediglich schematisch und nicht maßstabsgetreu. Gleiche Bezugszeichen bezeichnen gleiche oder gleichwirkende Merkmale.

### Ausführungsformen der Erfindung

Fig. 1 zeigt eine Darstellung eines Zugfahrzeugs 100 mit einem Steuergerät 102 gemäß einem Ausführungsbeispiel. Das Zugfahrzeug 100 zieht einen Anhänger 104. Zusammen bilden Zugfahrzeug 100 und Anhänger 104 ein Gespann 106. Der Anhänger 104 weist eine Auflaufbremse 108 auf. Die Auflaufbremse 108 wandelt eine Schubkraft 110 des Anhängers während eines Bremsvorgangs des Gespanns in ein Bremsmoment 112 an Radbremsen 114 des Anhängers 104 um.

Bei dem Bremsvorgang wird an Bremsen 116 des Zugfahrzeugs 100 ein Bremsdruck aufgebaut und das Zugfahrzeug 100 gebremst. Eine Massenträgheit 118 des Anhängers 104 lässt den Anhänger 104 auf das Zugfahrzeug 100 auflaufen. Der Anhänger 104 schiebt an einer Anhängerkupplung 120 des Zugfahrzeugs 100 mit der Schubkraft 110. Die Schubkraft 110 wird teilweise auf die Radbremsen 114 des Anhängers 104 übertragen und erzeugt dort das Bremsmoment 112. Das Bremsmoment 112 wird auf der Anhängerkupplung 120 des Zugfahrzeugs 100 als Stützkraft 122 abgestützt.

Bei dem Bremsvorgang wird eine Vorderachse 124 des Zugfahrzeugs durch eine Massenträgheit 126 des Zugfahrzeugs 100 belastet und eine Hinterachse 128 des Zugfahrzeugs 100 entlastet. Daher wird zumindest bei Bremsvorgängen ohne Anhänger 104 eine Bremskraftverteilung so eingestellt, dass an der Vorderachse 124 ein größerer Bremsdruck anliegt, als an der Hinterachse 128. Beispielsweise kann zwischen den Bremsdrücken ein Verhältnis von 70:30 eingestellt werden. Die Stützkraft 122 auf die Anhängerkupplung 120 wirkt der Entlastung der Hinterachse 128 entgegen. Die Massenträgheit 118 des Anhängers 104 bewirkt eine zusätzliche Stützkraft 130 auf die Anhängerkupplung 120. Durch die zusätzliche Stützkraft 130 wird der Entlastung der Hinterachse 128 weiter entgegengewirkt.

Bei dem hier vorgestellten Ansatz wird eine Wirkung der Auflaufbremse 108 durch das Steuergerät 102 überwacht und eine Bremskraftverteilung zwischen der Vorderachse 124 und der Hinterachse 128 des Zugfahrzeugs 100 unter Berücksichtigung der Wirkung eingestellt, wenn der Anhänger 104 an das Zugfahrzeug 100 angehängt ist. Dabei wird das Verhältnis der Bremskraftverteilung geändert und beispielsweise auf 60:40 eingestellt.

Um die Wirkung der Auflaufbremse 108 zu erfassen wird im Steuergerät 102 zuerst ein Gesamtgewicht des Gespanns 106 ermittelt. Das Gesamtgewicht wird beim Beschleunigen des Gespanns 106 ermittelt, da während eines Beschleunigungsvorgangs des Gespanns die zum Ermitteln des Gesamtgewichts notwendigen Informationen vorhanden sind. Aus einem Motorsteuergerät des Zugfahrzeugs 100 kann ein Antriebsmoment 132 an angetriebenen Achsen des Zugfahrzeugs 100 ausgelesen werden. Aus einer Geschwindigkeitsinformation eines Geschwindigkeitssensors des Zugfahrzeugs kann eine die Beschleunigung des Gespanns 106 repräsentierende Beschleunigungsinformation abgeleitet werden. Aus dem Antriebsmoment 132 und der Beschleunigung kann eine Gesamtmasse beziehungsweise das Gesamtgewicht des Gespanns ermittelt werden.

Bei einem Bremsvorgang setzt sich eine Gesamtbremswirkung des Gespanns aus einer Fahrzeugbremswirkung 134 und dem als Anhängerbremswirkung 136 bezeichneten Bremsmoment 112 des Anhängers 104 zusammen. Die Fahrzeugbremswirkung 134 ohne den Anhänger 104 ist bekannt. Die Gesamtbremswirkung wird während des Bremsvorgangs bestimmt. Dazu wird aus der Geschwindigkeitsinformation eine die Verzögerung des Gespanns 106 repräsentierende Verzögerungsinformation abgeleitet. Unter Verwendung des Gesamtgewichts und der Verzögerung kann im Steuergerät 102 die Gesamtbremswirkung bestimmt werden. Eine Differenz zwischen der Gesamtbremswirkung und der Fahrzeugbremswirkung 134 entspricht der Anhängerbremswirkung 136. Die Anhängerbremswirkung 136 beziehungsweise das Bremsmoment 112 bewirkt die Stützkraft 122.

Das Antriebsmoment 132 wird durch einen Rollwiderstand des Gespanns 106 beeinflusst. Der Rollwiderstand kann beispielsweise von Reifendrücken am Zugfahrzeug 100 und Anhänger 104 abhängen. Der Rollwiderstand kann beispielsweise bei beschleunigungsfreier Fahrt unter Verwendung des Antriebsmoments 132 ermittelt werden. Ebenso kann der Rollwiderstand während eines antriebslosen Rollens unter Verwendung einer Geschwindigkeitsveränderung ermittelt werden. In einem Ausführungsbeispiel wird die Gesamtmasse des Gespanns 106 unter Berücksichtigung des Rollwiderstands ermittelt.

Das Antriebsmoment 132 wird durch eine Steigung oder ein Gefälle der Straße beeinflusst. Das Gespann 106 benötigt bergauf zusätzliches Antriebsmoment 132 und bergab weniger Antriebsmoment 132 zum Erreichen der gleichen Beschleunigung wie in der Ebene. Daher erfolgt die Berechnung des Gesamtgewichts in einem Ausführungsbeispiel ferner unter Berücksichtigung der Steigung beziehungsweise des Gefälles der Straße unter dem Gespann 106. Die Steigung beziehungsweise das Gefälle kann durch einen Neigungssensor des Zugfahrzeugs 100 gemessen werden. Alternativ kann die Steigung beziehungsweise das Gefälle aus Kartendaten des Navigationssystems ausgelesen werden.

Das Antriebsmoment 132 wird durch Gegenwind und Rückenwind beeinflusst. Das Gespann 106 benötigt gegen den Wind zusätzliches Antriebsmoment 132 und mit dem Wind weniger Antriebsmoment 132 zum Erreichen der gleichen Beschleunigung wie bei Windstille. Daher erfolgt die Berechnung des Gesamtgewichts in einem Ausführungsbeispiel ferner unter Berücksichtigung einer Windinformation. Die Windinformation kann aus einer Wetterinformation ausgelesen werden. Alternativ kann das Zugfahrzeug 100 eine Winderfassungseinrichtung aufweisen, die die Windinformation bereitstellt.

In einem Ausführungsbeispiel weisen die Radbremsen 114 des Anhängers 106 je einen Temperatursensor 138 auf. Der Temperatursensor 138 stellt ein eine Temperatur der Radbremse 114 abbildendes Temperatursignal 138 für das Steuergerät 102 bereit. Eine erhöhte Temperatur der Radbremsen 114 wird durch Reibung in den Radbremsen 114 verursacht. Eine dauerhaft erhöhte Temperatur deutet auf ein Schleifen der Radbremsen 114 hin. Durch das Schleifen kann die Berechnung des Gesamtgewichts verfälscht werden, da aufgrund des Schleifens ein erhöhtes Antriebsmoment 132 benötigt wird, um das Gespann 106 zu beschleunigen. Wenn die Temperatur nur während des Bremsvorgangs ansteigt und danach wieder abfällt, kann auf eine normale Funktion der Radbremsen geschlossen werden. Wenn die Temperatur bei einem Bremsvorgang weniger weit ansteigt, als erwartet, kann auf ein ungenügendes Bremsmoment 112 der Radbremsen geschlossen werden. Das Temperatursignal 138 wird im Steuergerät 102 überwacht. So kann einerseits die Funktion der Auflaufbremse 108 überwacht werden und andererseits eine verfälschte Einstellung der Bremskraftverteilung verhindert werden. Bei einem Defekt der Auflaufbremse 108 kann ein Fahrer des Zugfahrzeugs 100 gewarnt werden.

In einem Ausführungsbeispiel wird die im Steuergerät 102 bestimmte Anhängerbremswirkung überwacht. Dabei wird die tatsächliche Anhängerbremswirkung mit einer erwarteten Anhängerbremswirkung verglichen und eine Warnung bereitgestellt, wenn die tatsächliche Anhängerbremswirkung kleiner als die erwartete Anhängerbremswirkung ist.

Mit anderen Worten wird eine Diagnose für eine Auflaufbremse eines Wohnwagens oder Anhängers und eine Anpassung des Bremsdrucks an der Hinterachse des PKW vorgestellt.

Anhänger werden teilweise nur sehr unregelmäßig benutzt. Schwere Anhänger haben eine Auflaufbremse. Langes Stehen kann die Auflaufbremse beschädigen. Die Wirkung lässt dann nach. Die Information über die Fahrbahnneigung und die aktuelle Windsituation sind online verfügbar.

Mit dem hier vorgestellten Ansatz kann ein automatisches Diagnostizieren der Stärke der Auflaufbremse eines Anhängers durchgeführt werden. So können Unfälle aufgrund von defekten Auflaufbremsen an Anhängern vermieden werden.

In einer ersten Phase erfolgt ein Anlernen. Bei normaler Fahrt ohne Anhänger kann der Zusammenhang aus angelegtem Bremsdruck an den Bremsscheiben eines Fahrzeuges und der Verzögerung angelernt werden.

In einer zweiten Phase erfolgt eine Ermittlung des Gespanngewichts. Zunächst wird auf gerader Strecke festgestellt, ob die Auflaufbremse des Wohnwagens schleift. Hierzu wird bei nahezu gerader Strecke, auf der die Auflaufbremse nicht wirkt, im Rollvorgang die Gespannverzögerung mit einer Gespannverzögerungserwartung verglichen.

Dem System ist die Windsituation, die Straßenneigung und der CW Wert des Fahrzeuges bekannt.

Da durch ein dauerhaftes Schleifen erhöhte Wärme entsteht wird in einem Ausführungsbeispiel diese Temperaturveränderung durch einen Temperatursensor an der Auflaufbremse überwacht.

In einem zweiten Schritt kann das Fahrzeug nun das ungefähre Gewicht des Gespanns selbst bestimmen. Hierzu wird auf der Strecke das aktuelle aufgebrachte Fahrtmoment aus dem Steuergerät ausgelesen. Mit der Beschleunigung kann nun aus F=m*a die Gesamtmasse bestimmt werden. Sowohl die Windsituation als auch die Steigung der Fahrtstrecke und Cw*v fließen mit ein. Das Ergebnis ist also eine Gesamtmasse des Gespanns.

In einer dritten Phase erfolgt eine Diagnose der Bremse. Die Auflaufbremse soll ein Schieben des Fahrzeugs durch den Anhänger reduzieren. Im Fahrzeug ist der Bremsdruck an den einzelnen Bremsscheiben bekannt. Bei normaler Fahrt ohne Anhänger ist der Zusammenhang aus angelegtem Bremsdruck an den Bremsscheiben und der Verzögerung bereits bekannt.

Wenn nun der Hänger angehängt ist, ist in einem Verzögerungsvorgang bekannt, da die Gesamtmasse des Gespannes aus der zweiten Phase bekannt ist, wieviel Gesamtbremswirkung anliegt. Wird nun die Bremswirkung der Fahrzeugbremse abgezogen, repräsentiert das Ergebnis, wieviel Bremswirkung der Anhänger selbst aufwendet. Somit kann eine Aussage getroffen werden, wieviel Bremswirkung von der Auflaufbremse ausgeht.

In einer vierten Phase wird das Bremsmoment der Hinterachse des Fahrzeugs zeitweise erhöht, da ein am Anhänger oder Wohnwagen aufgebrachtes Bremsmoment den Anpressdruck der PKW-Hinterachse auf der Straße erhöht. Dadurch wird die Verzögerung des Gespanns verbessert.

Das System benötigt Informationen aus dem Motorsteuergerät, dem Bremssteuergerät und der Cloud. Die Bremsfunktionen können im Bremssteuergerät laufen.

Jedes Fahrzeug mit z.B. Wohnwagen kann mit dem hier vorgestellten Ansatz ausgerüstet werden. Ein Temperatursensor zur Diagnose kann als Komponente in die Auflaufbremse integriert werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines Gespanns (106) aus einem Zugfahrzeug (100) und einem Anhänger (104) mit einer Auflaufbremse (108), wobei ein Gesamtgewicht des Gespanns (106) unter Verwendung eines Antriebsmoments (132) des Zugfahrzeugs (100) und einer Beschleunigung des Gespanns (106) ermittelt wird, eine Anhängerbremswirkung (136) der Auflaufbremse (108) unter Verwendung einer Verzögerung des Gespanns (106), des ermittelten Gesamtgewichts und einer vorbekannten Fahrzeugbremswirkung des Zugfahrzeugs (100) ohne den Anhänger (104) ermittelt wird und eine Bremskraftverteilung des Zugfahrzeugs (100) unter Verwendung der ermittelten Anhängerbremswirkung (136) eingestellt wird.

2. Verfahren gemäß Anspruch 1, bei dem das Gesamtgewicht ferner unter Verwendung eines Rollwiderstands des Gespanns (106) ermittelt wird.

3. Verfahren gemäß einem der vorhergehenden Ansprüche, bei dem das Gesamtgewicht ferner unter Verwendung einer Steigung unter dem Gespann (106) ermittelt wird.

4. Verfahren gemäß einem der vorhergehenden Ansprüche, bei dem das Gesamtgewicht ferner unter Verwendung einer aktuellen Windinformation ermittelt wird

5. Verfahren gemäß einem der vorhergehenden Ansprüche, bei dem beim Ermitteln des Gesamtgewichts eine Temperatur an der Auflaufbremse (108) überwacht wird und eine Warnung bereitgestellt wird, wenn die Temperatur zu hoch ist.

6. Verfahren gemäß einem der vorhergehenden Ansprüche, bei dem die Anhängerbremswirkung (136) überwacht wird und eine Warnung bereitgestellt wird, wenn die Anhängerbremswirkung (136) zu gering ist.

7. Verfahren gemäß einem der vorhergehenden Ansprüche, bei dem die Bremskraftverteilung ferner unter Verwendung eines unter Verwendung des Gesamtgewichts und eines Fahrzeuggewichts des Zugfahrzeugs (100) ermittelten Anhängergewichts eingestellt wird.

8. Steuergerät (102), das dazu ausgebildet ist, das Verfahren gemäß einem der vorhergehenden Ansprüche in entsprechenden Einrichtungen auszuführen, umzusetzen und/oder anzusteuern.

9. Computerprogrammprodukt, das dazu eingerichtet ist, einen Prozessor bei Ausführung des Computerprogrammprodukts dazu anzuleiten, das Verfahren gemäß einem der Ansprüche 1 bis 7 auszuführen, umzusetzen und/oder anzusteuern.

10. Maschinenlesbares Speichermedium, auf dem das Computerprogrammprodukt gemäß Anspruch 9 gespeichert ist.

## Claims

1. Method for operating a tractor-trailer combination (106) consisting of a tractor vehicle (100) and a trailer (104) with an overrun brake (108), wherein an overall weight of the tractor-trainer combination (106) is determined using a driving torque (132) of the tractor vehicle (100) and an acceleration of the tractor-trailer combination (106), a trailer braking action (136) of the overrun brake (108) is determined using a deceleration of the tractor-trailer combination (106), the determined overall weight and a previously known vehicle braking action of the tractor vehicle (100) without the trailer (104), and a brake force distribution of the tractor vehicle (100) is set using the determined trailer braking action (136).

2. Method according to Claim 1, in which the overall weight is furthermore determined using a rolling resistance of the tractor-trailer combination (106).

3. Method according to either of the preceding claims, in which the overall weight is furthermore determined using a slope under the tractor-trailer combination (106) .

4. Method according to one of the preceding claims, in which the overall weight is furthermore determined using current wind information.

5. Method according to one of the preceding claims, in which during the determining of the overall weight a temperature at the overrun brake (108) is monitored and a warning is provided if the temperature is too high.

6. Method according to one of the preceding claims, in which the trailer braking action (136) is monitored and a warning is provided if the trailer braking action (136) is too low.

7. Method according to one of the preceding claims, in which the brake force distribution is furthermore set using a trailer weight determined using the overall weight and a weight of the tractor vehicle (100).

8. Control unit (102) which is designed to carry out, use and/or activate the method according to one of the preceding claims in corresponding devices.

9. Computer program product which is designed to instruct a processor for executing the computer program product to carry out, use and/or activate the method according to one of Claims 1 to 7.

10. Machine-readable storage medium on which the computer program product according to Claim 9 is stored.

## Revendications

1. Procédé pour faire fonctionner un attelage (106) composé d'un véhicule tracteur (100) et d'une remorque (104) avec un frein à inertie (108), un poids total de l'attelage (106) étant déterminé en utilisant un couple d'entraînement (132) du véhicule tracteur (100) et une accélération de l'attelage (106), une action (136) de freinage de remorque du frein à inertie (108) étant déterminée en utilisant une décélération de l'attelage (106), le poids total déterminé et une action de freinage de véhicule connue au préalable du véhicule tracteur (100) sans la remorque (104), et une répartition de la force de freinage du véhicule tracteur (100) étant réglée en utilisant l'action déterminée (136) de freinage de remorque.

2. Procédé selon la revendication 1, dans lequel le poids total est en outre déterminé en utilisant une résistance au roulement de l'attelage (106).

3. Procédé selon l'une des revendications précédentes, dans lequel le poids total est en outre déterminé en utilisant une pente sous l'attelage (106).

4. Procédé selon l'une des revendications précédentes, dans lequel le poids total est en outre déterminé en utilisant une information de vent actuel.

5. Procédé selon l'une des revendications précédentes, dans lequel, lors de la détermination du poids total, une température au niveau du frein à inertie (108) est surveillée et un avertissement est émis si la température est trop élevée.

6. Procédé selon l'une des revendications précédentes, dans lequel l'effet (136) de freinage de la remorque est surveillé et un avertissement est émis si l'effet (136) de freinage de la remorque est trop faible.

7. Procédé selon l'une des revendications précédentes, dans lequel la répartition de la force de freinage est en outre ajustée en utilisant un poids de remorque déterminé en utilisant le poids total et un poids de véhicule du véhicule tracteur (100).

8. Dispositif de commande (102), conçu de façon à exécuter, mettre en œuvre et/ou commander le procédé selon l'une des revendications précédentes dans des dispositifs correspondants.

9. Produit programme d'ordinateur adapté pour, lors de l'exécution du produit programme d'ordinateur, guider un processeur de façon à exécuter, mettre en œuvre et/ou piloter le procédé selon l'une des revendications 1 à 7.

10. Support de stockage lisible par machine sur lequel est stocké le produit programme d'ordinateur selon la revendication 9.
